# EUROPEAN PATENT APPLICATION

(11) **EP 4 844 510 A1**
(43) Date of publication of application: **25.11.2026**
(21) Application number: 26175564.9
(22) Date of filing: 29.04.2026
(51) Int. Cl.: G05B 19/418, G05B 19/401, G05B 19/406

(54) **COMPUTER-IMPLEMENTED MONITORING METHOD FOR MONITORING A WORKING PROCESS**

(30) Priority: 23.05.2025 IT 202500011848
(71) Applicant: MICROTEC S.p.A., 39042 Bressanone (BZ) (IT)
(72) Inventor: Colorio, Rudy, 31015 Conegliano (TV) (IT); Bock, Philipp, 39057 Appiano SSDV (BZ) (IT); Tschurtschenthaler, Konrad, 39040 Castelrotto (BZ) (IT)
(74) Representative: Ponchiroli, Simone

(57) **Abstract**

A computer-implemented monitoring method, for monitoring a working process wherein an initial real product is divided into a plurality of final real products in a number N ≥ 2 of steps, the monitoring method comprising, after execution of an nth step of the working process, where 1 ≤ n < N, a check processing phase during which an nth expected value is determined which is obtainable by carrying out the (N-n) steps of the working process to be carried out starting from the (n+1)th step on all of the real products at outfeed from the nth step, and a comparison phase in which the nth expected value calculated in the check processing phase is compared with a reference expected value to determine a change in expected value due to execution of the nth step.

## Description

This invention relates to a computer-implemented monitoring method for monitoring a working process of the type in which an initial real product undergoes a plurality of working operations in order to obtain a plurality of final real products.

In particular, this invention arises regarding the woodworking sector, in which an initial real product (for example a piece of a log or a cant) is divided into a plurality of real products (for example a plurality of boards) with the goal of maximising the economic value obtained. For example, this is the case of all of those woodworking processes intended to obtain wood for structural use where the economic value of each individual board is determined by the mechanical performance that the board can guarantee.

Therefore, hereinafter reference will often be made to the woodworking sector, but that shall not limit the scope of the invention described and set out in the claims, which may be implemented in any other context in which it may be advantageous.

As is known, maximising the economic value of the products which can be obtained from a starting piece of wood is far from simple for a number of reasons.

First, wood is a natural material and every piece of wood has its own unique aesthetic and mechanical characteristics which are determined by a plurality of factors such as the direction of the fibres, the presence of defects such as knots, cracks, etc., the presence of sapwood or of heartwood, etc.

Considering that, over the years many methods have been developed which allow inspection of a piece of wood in order to determine many of its characteristics; these include three-dimensional scanning, photographic surface inspection, radiographic inspection, tomography scan inspection, etc.

Furthermore, various optimisation techniques have been defined which, starting with the data available about the piece of wood, allow the identification of a cutting pattern for the piece of wood which maximises the economic value of the final products. Depending on the embodiments, the optimisation techniques may comprise more or less conditions relating to the type and dimensions of the products which can be obtained.

However, the economic value effectively produced by each piece of wood is also checked a posteriori; once the final products have been obtained, they undergo further analyses, which are usually used to assign each a quality class (first, second, third or class 1, 2, 3, etc.). The effective economic value is then calculated using formulae which take into consideration the dimensions of the piece of wood, the quality class and commercial parameters.

As is known, in many cases woodworking processes are long and complex processes, in which many working phases follow on from each other. Moreover, in many cases, the different phases may be carried out some time apart from each other, for both logistical and commercial reasons. One logistical reason may be the fact that the working operations are carried out in different places which are far from each other. One commercial reason may be that, initially, semi-finished products may be prepared which are converted to final products only at the moment when a customer order must be satisfied; this may happen for example when a board with a predetermined cross-section may be marketed both whole, and cut into shorter pieces.

All of this may affect the economic value that the producer can effectively obtain for a predetermined piece of wood, given that, over time, even the economic values recognised by the market for a predetermined product may change.

Therefore, it is easy to understand how the decision taken in the initial optimisation phase might a posteriori prove to be less advantageous than expected; for example, in the space of a few months the market might lose interest in a first board size and instead favour a second size that was previously undervalued, the consequence being that, while at the moment of initial optimisation obtaining a predetermined number of boards of the first size was by far the most economically advantageous solution, at the moment of effective marketing it would have been much more advantageous if the optimisation had been carried out with a view to obtaining boards of the second size.

Moreover, in some cases, it may even be the case that, over time, even the rules for assigning the classification to each board change, so that a board which was estimated to be class 1 (that is to say, the best classification) at the moment of optimisation may in fact only be ranked with a lower classification at the moment of marketing.

A further problem in the woodworking sector is linked to the fact that obtaining from a piece of wood precisely the pieces expected in the optimisation phase is far from simple and, usually, impossible especially when the working is carried out starting with a log.

In fact, as is easy to infer, a first difficulty may be encountered in effectively succeeding in making the various cuts precisely in the position defined in the optimisation phase; even ignoring the fact that there may be malfunctions, each apparatus inevitably has operating tolerances which determine some level of working imprecision.

In contrast, a second difficulty is linked to the fact that wood is a material that in some ways is unpredictable which, during the various working operations, may undergo unexpected deformations; for example, in the drying phase, cracks may form or internal tensions arise which deform the boards compared with what was expected.

A further critical aspect is linked to the fact that some types of defects may be difficult to identify before proceeding with optimisation.

In order to take into account all of these possible critical aspects, in many plants, during the working process, the working phases lacking are re-optimised multiple times, based on the characteristics of the semi-finished products obtained; for that purpose at least after several particularly critical working operations, the process may comprise a further phase of scanning the characteristics of the intermediate products obtained up to that moment and a re-optimisation phase based on those updated characteristics.

For example, a process of converting a log into boards may comprise the following main phases:
1) cutting the log to obtain a cant;
2) cutting sideboards from the cant to also obtain a smaller central cant;
3) cutting the central cant into main boards;
4) drying all of the boards;
5) planing all of the boards;
6) if necessary cutting the boards transversally, into boards ready for marketing.

In a process of this type, advantageously there may be a scanning phase combined with a re-optimisation of the working operations after each of the first five phases.

Therefore, to summarise, in the production process for wooden boards, many factors may contribute to the change in the value of the final products compared with what was expected in the optimisation phase.

In fact, the changes may be due to the limited mechanical precision of the machines used or due to malfunctions in them, natural causes (changes in the properties of the wood and defects, for example, before and after drying, sawing), the presence of defects which are difficult/impossible to detect until they have been rendered identifiable, causes linked to human activities, such as changes to production settings (rules for classification, selections, lengths, etc.), and changes in product value (determined by the changes in market prices or production goals).

In such a complicated and complex context, it is therefore normal for board producers to often encounter significant differences between what is effectively produced and what was expected in the optimisation phase.

However, the biggest difficulty for producers is understanding what effectively caused those discrepancies, whether natural causes, causes linked to working process operation or external causes.

For producers it would be essential to understand if a difference in value encountered by them is due to working imprecisions of the various apparatuses, malfunctions in those apparatuses, optimisation errors at the start of the working process or changes in external circumstances.

Understanding that production loses value compared with what would potentially be achievable due to causes linked to operation of the apparatuses used in the working process, would also allow the problem to be dealt with and solved, or at least its effects minimised. That would be more advantageous the more possible it were to precisely identify which part of the production process bears the greatest responsibility.

In this context, the technical purpose which forms the basis of this invention is to define a computer-implemented monitoring method for monitoring a working process, which overcomes the above-mentioned disadvantages.

In particular, the technical purpose of this invention is to define a computer-implemented monitoring method, for monitoring a working process, which allows an understanding of if one or more phases of the working process affect a change in the economic value obtainable with the process, compared with an initial optimised target.

The technical purpose and the aims indicated are substantially achieved by a computer-implemented monitoring method, for monitoring a working process, as defined in the independent claim. Particular embodiments of this invention are defined in the corresponding dependent claims.

Further features and the advantages of this invention will be more apparent from the detailed description of several preferred, non-limiting embodiments of a computer-implemented monitoring method for monitoring a working process described below with reference to the accompanying drawings, in which:
- Figure 1 is a block diagram of a working process to which the monitoring method according to this invention may be applied;
- Figure 2 is a block diagram of a generic implementation of a monitoring method in accordance with this invention regarding an nth step of the working process of Figure 1;
- Figure 3 is a block diagram of two successive steps of a working process, different from the first and the last, each of which is monitored by means of a first embodiment of the monitoring method according to this invention;
- Figure 4 is a block diagram of the implementation of the first embodiment of the monitoring method according to this invention, with reference to the first and second step of the working process of Figure 3;
- Figure 5 is a block diagram of the implementation of the first embodiment of the monitoring method according to this invention with reference to the last step of the working process of Figure 3, together with a final step of the working process in which an assessment of the real products obtained is carried out;
- Figure 6 is a block diagram of two successive steps of a working process, different from the first and the last, each of which is monitored by means of a second embodiment of the monitoring method according to this invention;
- Figure 7 is a block diagram of the implementation of the second embodiment of the monitoring method according to this invention, with reference to the first and second step of the working process of Figure 6;
- Figure 8 is a block diagram of the implementation of the second embodiment of the monitoring method according to this invention with reference to the last step of the working process of Figure 6, together with a final step of the working process in which an assessment of the real products obtained is carried out;
- Figure 9 is a block diagram of two successive steps of a working process, different from the first and the last, each of which is monitored by means of a third embodiment of the monitoring method according to this invention;
- Figure 10 is a block diagram of the implementation of the third embodiment of the monitoring method according to this invention, with reference to the first and second step of the working process of Figure 9; and
- Figure 11 is a block diagram of the implementation of the third embodiment of the monitoring method according to this invention with reference to the last step of the working process of Figure 9, together with a final step of the working process in which an assessment of the real products obtained is carried out.

The computer-implemented monitoring method according to this invention may be implemented regarding a working process in which an initial real product is divided into a plurality of final real products and in which the working process comprises a number N of steps carried out one after another, where N ≥ 2.

Since it is a computer-implemented method, all of the phases described below, even if not explicitly indicated, shall be understood as being entirely implemented by means of one or more computers specially programmed to implement them.

This invention also relates to a computer program comprising instructions which, when the program is run in a computer, make the computer carry out the phases of the monitoring method, and a data processing device comprising means configured to implement the phases of the monitoring method.

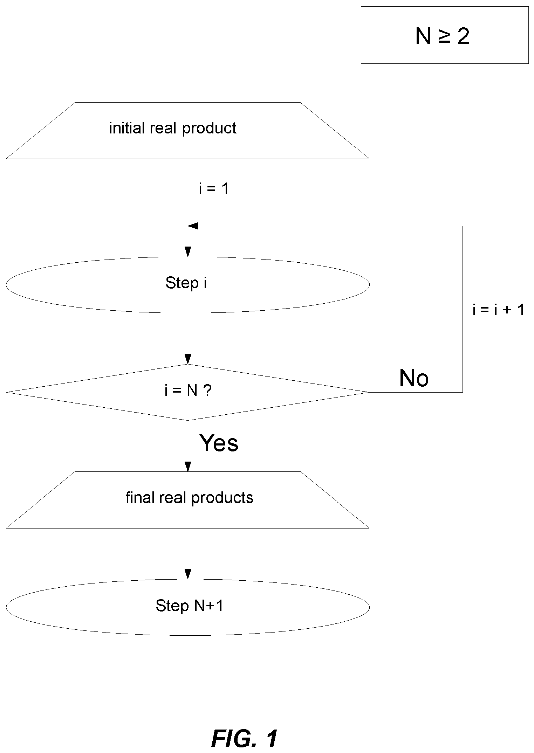

A working process which comprises a plurality of steps and with which the monitoring method according to this invention may be associated, is schematically shown in Figure 1 which also illustrates a subsequent final step N+1, which corresponds to a final assessment step during which no working operation is carried out on the final real products obtained, but in which the final real products are inspected and are assigned an economic value and/or a classification.

At least as regards the working processes in which the initial real product is a piece of wood, in the context of this description and of the claims which follow, all references to value, economic value and/or classification of the final products shall be understood as equivalent to each other since, given the dimensions of final products constituted of boards and the like, the economic value is determined by the respective quality class.

In a working process to which the monitoring method according to this invention may be applied, in each step of the working process, one or more real products at infeed, are worked to obtain one or more real products at outfeed. Moreover, the working process comprises an initial step, in which the real product at infeed is the initial real product, and a final step, in which each real product at outfeed constitutes one final real product of the plurality of final real products obtained from the same initial real product. By way of example, a step of the working process may correspond to the step in which a log is worked to obtain a cant with four flat lateral faces, the step in which one or more sideboards are obtained from a cant, the step in which two or more main boards are obtained from a central cant, the step in which each board is dried or planed, etc.

In general, for each step of the working process before the final step, each real product at outfeed was obtained from the initial real product during execution of the working process and constitutes a real product at infeed to the immediately subsequent step in the working process; in other words each real product at outfeed derives/was obtained from the initial real product.

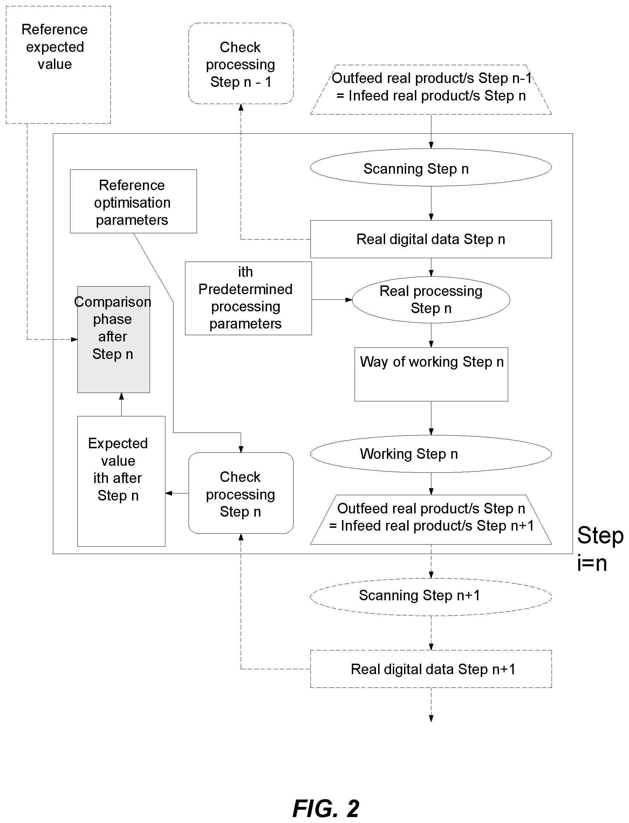

As illustrated in Figure 2, in its most general embodiment, the monitoring method according to this invention may be implemented regarding a generic nth step of the working process, where 1 ≤ n < N and comprises, after execution of that nth step, execution in sequence of a check processing phase and of a comparison phase. Moreover, depending on requirements, the monitoring method may be implemented regarding a single step of the working process, or regarding a plurality of steps or regarding all of the steps of the working process.

During the check processing phase, an nth expected value is determined which is obtainable by carrying out the (N-n) steps of the working process still to be carried out, starting from the (n+1)th step (that is to say, from the subsequent step of the process), on all of the real products at outfeed from the nth step which derive from the initial real product. In other words, in this phase of the monitoring method all of the intermediate products obtained from the initial real product by carrying out all of the steps of the process up to and including the nth step are considered, and the value which can be expected to be obtained (nth expected value) by carrying out, on those intermediate products, the (N-n) steps of the working process still to be carried out is determined.

In the comparison phase the nth expected value calculated in the check processing phase is compared with a reference expected value which represents a value which, similarly, was expected to be obtained as a whole from the initial real product or from all of the intermediate products derived from the initial real product at infeed to a kth step of the working process, where 0 < k ≤ n, by carrying out all of the (N-(k-1)) steps of the working process still to be carried out. The result of the comparison phase therefore indicates if, and to what extent, the value expected to be obtained from the initial real product changed during the working process and, more precisely, if and how it changed between the moment when the reference expected value was assessed and the moment when the nth expected value was assessed in the check processing phase.

In the context of this invention, the expression "expected to be obtained" refers to a value which is only expected in the context of an assessment phase before effectively carrying out the working operations.

Advantageously, the reference expected value and the nth expected value are calculated using the same reference optimisation parameters and, respectively, real data relative to the real products at infeed to the kth step and at outfeed from the nth step (that is to say, based on real data available at different moments of the working process). The use of the same parameters allows the assessment of the nth expected value to be freed from any changes in parameters due to human intervention, allowing a more precise appraisal of the match between the nth step of the working process and what was initially expected.

In some embodiments, for example, the reference expected value is calculated before starting the working process, whilst in other embodiments it is calculated at infeed to the nth step.

Advantageously, moreover, to calculate the nth expected value use is made of an assessment algorithm which is constituted either of the same algorithm used for calculating the reference expected value or of a part of that algorithm. In some embodiments, the monitoring method according to this invention is advantageously applied regarding a working process in which each step of the working process comprises, in order, a scanning phase, a real processing phase and a working phase. During the scanning phase, the real product at infeed is scanned with one or more electronic scanning devices which generate real digital data relative to the real product at infeed. During the real processing phase, an electronic processing device determines a way of working the real product at infeed, using the real digital data relative to the real product at infeed obtained in the scanning phase and predetermined processing parameters. Finally, during the working phase, a working apparatus carries out a working operation on the real product at infeed in accordance with the way of working determined in the real processing phase, in order to obtain the one or more real products at outfeed from that step of the working process.

Depending on the embodiments, the scanning phase may comprise the acquisition of various information (always in digital format) regarding the real products at infeed. By way of example only, with reference to a woodworking process, the scanning phase may comprise:
- acquisition of a geometric profile of the real product at infeed (two-dimensional or three-dimensional) by means of laser scanning devices or optical scanning devices;
- acquisition of images of the surface of the real product at infeed, in the visible spectrum, in the infra-red spectrum, etc.;
- acquisition of information about the orientation of the fibres of the wood by means of lighting with structured light and its scatter analysis on the surface of the wood;
- acquisition of radiographic and/or tomographic images of the real product at infeed.

In a way that is known in itself, the real processing phase may comprise determining the way of working the real product at infeed based on an optimisation algorithm which uses the real digital data to calculate the way of working the product which can allow the obtainment of the greatest economic value from that step of the working process (therefore there is an optimisation). In contrast, in other embodiments, the way of working does not comprise any optimisation but, if necessary, only the adaptation of predetermined working operations to the digital data acquired.

In some embodiments of the monitoring method, moreover, the method is associated with a working process which also comprises, in the initial step, the real processing phase being part of an optimisation phase for the entire working process for the initial real product, with which an initial plurality of virtual optimised final products is defined, to be obtained from the initial real product at the end of the N subsequent steps. The optimisation phase is carried out based on the real digital data generated for the initial real product and the predetermined optimisation parameters. By way of example, in the woodworking sector, when the initial real product is a log, in the initial step the real processing phase comprises optimisation of the cutting pattern and consequent definition of which boards (initial plurality of virtual optimised final products) should be obtained at the end of the working process in order to maximise the economic value obtainable. In some preferred embodiments, the real digital data generated for the initial real product are constituted of a three-dimensional tomographic model of the initial real product.

In the context of this invention, when reference is made to "virtual" products the intention is to refer to products which exist only as digital models of real products which should be obtained as a result of the working operations in the working process.

Regarding the embodiments of the working process in which each step of the working process comprises the scanning phase, the real processing phase and the working phase, the monitoring method in accordance with this invention advantageously comprises, after execution of the nth step of the working process to be monitored, a sequence of phases for monitoring the nth step of the working process which comprises a receiving phase, a check processing phase and the already mentioned comparison phase (Figure 2).

During the receiving phase, the real digital data generated in the scanning phase of the (n+1)th step of the working process (that is to say, in the subsequent step) are received, relative to all of the one or more real products at outfeed from the nth step which derive from the initial real product.

During the check processing phase, the above-mentioned reference optimisation parameters are used and the real digital data received in the receiving phase and:
- an optimisation is carried out of the (N-n) steps of the working process still to be carried out starting from and including the (n+1)th step;
- in this way an updated nth plurality of virtual optimised final products is determined to be obtained from all of the one or more real products at outfeed from the nth step which derive from the initial real product; and
- the nth expected value is determined for that updated nth plurality of virtual optimised final products to be obtained.

Finally, in the comparison phase there is an assessment of whether or not the expected value after execution of the nth step has changed compared with what was the reference expected value. Moreover, preferably, during the comparison phase a change in the expected value between the reference expected value and the nth expected value is quantified.

Advantageously, when the monitoring method is carried out regarding each step of the working process, the sequence of phases for monitoring the nth step of the working process is repeated after each step of the working process. In some preferred embodiments of this invention, the monitoring method also comprises a reference processing phase during which the reference expected value is determined using the reference optimisation parameters. Advantageously, the reference processing phase is carried out using real digital data generated in the scanning phase of the already mentioned kth step (where 0 < k ≤ n) for all of the real products at infeed to the kth step which derive from the initial real product. Moreover, similarly to what occurs in the check processing phase, during the reference processing phase an optimisation is carried out of the (N-(k-1)) steps of the working process still to be carried out starting from and including the kth step and in that way an updated kth plurality of virtual optimised final products is determined, to be obtained from all of the one or more real products at infeed to the kth step which derive from the initial real product. Moreover, an expected value is determined for that updated kth plurality of virtual optimised final products and the reference expected value used is the expected value determined in that way for the updated kth plurality of virtual optimised final products.

Depending on the embodiments, the reference processing phase may be carried out in various ways as regards the choice of the kth step.

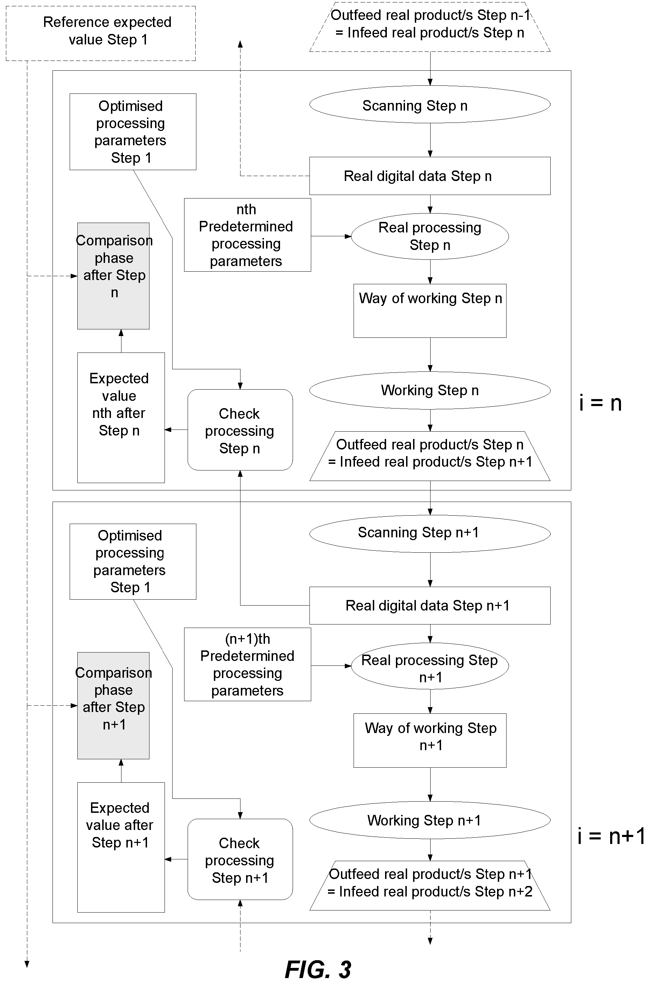

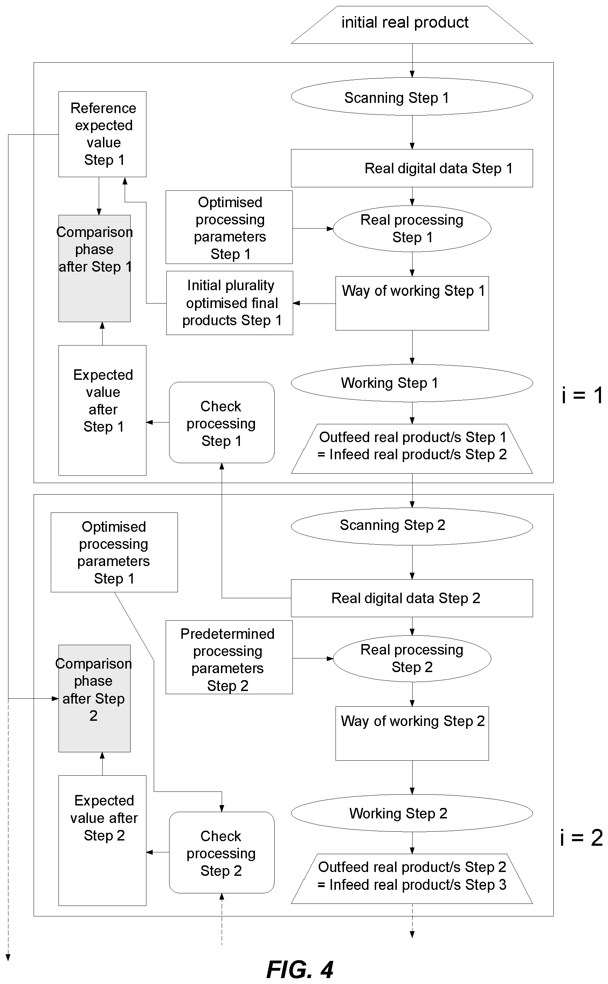

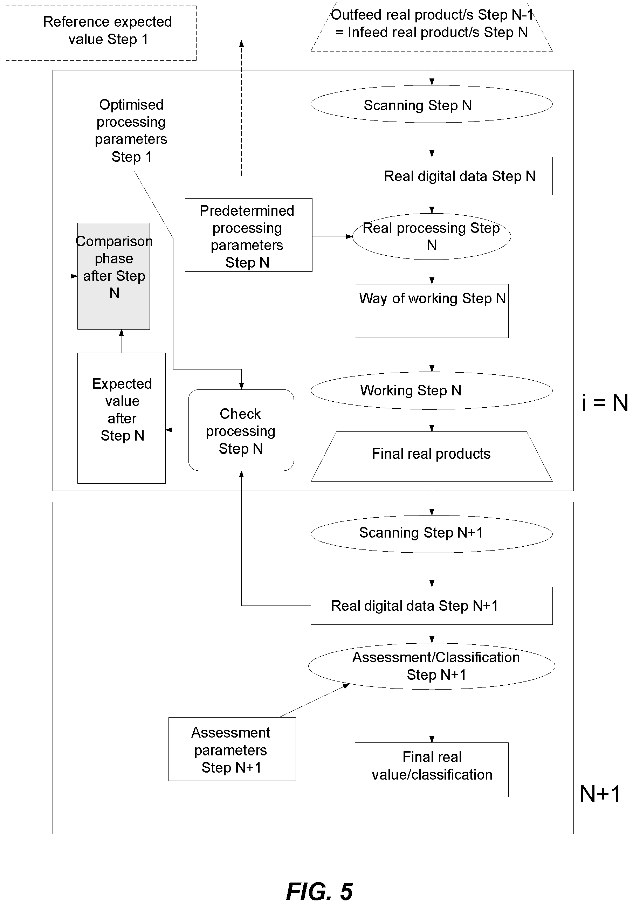

In some embodiments, to which Figures 3 to 5 refer, the reference processing phase is carried out using, on one hand, the predetermined optimisation parameters as reference optimisation parameters and, on the other hand, the real digital data generated in the scanning phase of the initial step (Figure 4); it also comprises the optimisation phase for the entire working process for the initial real product. In this case, during the reference processing phase, the expected value is determined for the initial plurality of virtual optimised final products and the reference expected value used is the expected value determined for the initial plurality of virtual optimised final products. Therefore, in these embodiments, the comparison phase supplies a measurement of how the expected value changed between the start of the working process and the end of the nth step.

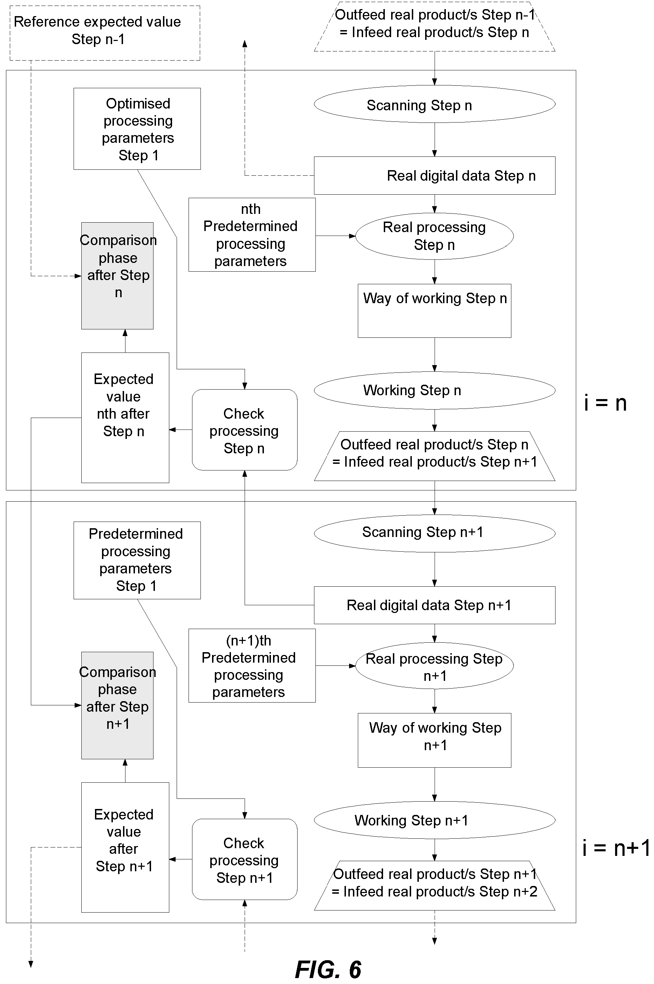

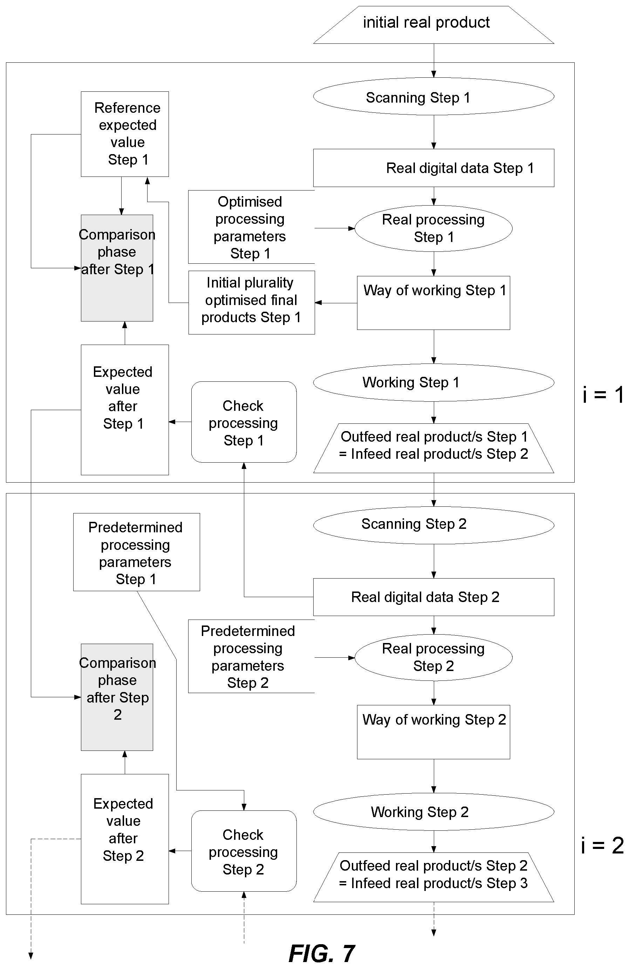

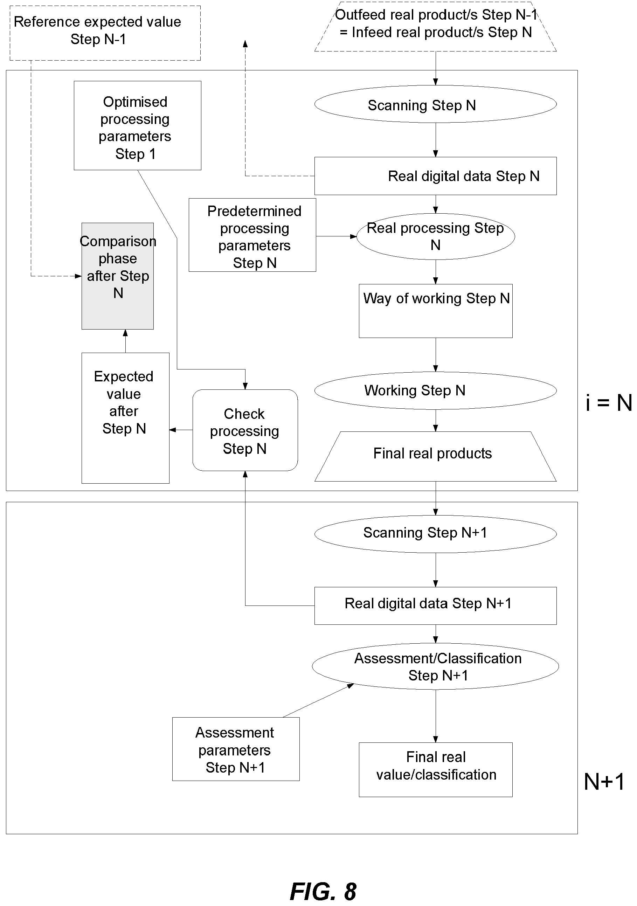

In other embodiments, to which Figures 6 to 8 refer, the reference processing phase is carried out using, on one hand, the predetermined optimisation parameters as reference optimisation parameters and, on the other hand, the real digital data generated in the scanning phase of the nth step for all of the real products at infeed to the nth step which derive from the initial real product. In this case, during the reference processing phase an optimisation is carried out of the (N-(n-1)) steps of the working process still to be carried out starting from and including the nth step, and in that way an updated nth plurality of virtual optimised final products is determined to be obtained from all of the one or more real products at infeed to the nth step which derive from the initial real product. Moreover, an expected value is determined for that updated nth plurality of virtual optimised final products and the reference expected value used is the expected value determined for the updated nth plurality of virtual optimised final products. Therefore, in these embodiments, the comparison phase supplies a measurement of how the expected value changed between the start and the end of one specific step of the working process, using for both assessments the same criteria used for the initial optimisation of the entire working process.

It should be noticed that, when the monitoring method has also been carried out for the previous (n-1)th step, the expected value determined for the updated nth plurality of virtual optimised final products coincides with the (n-1)th expected value, that is to say, with the expected value calculated in the check processing phase of the previous (n-1)th step.

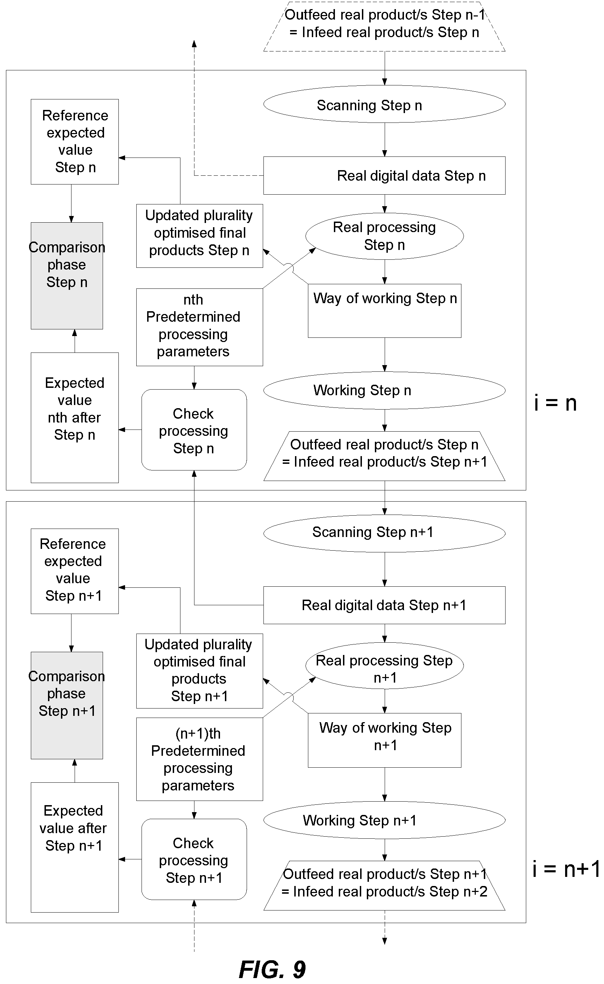

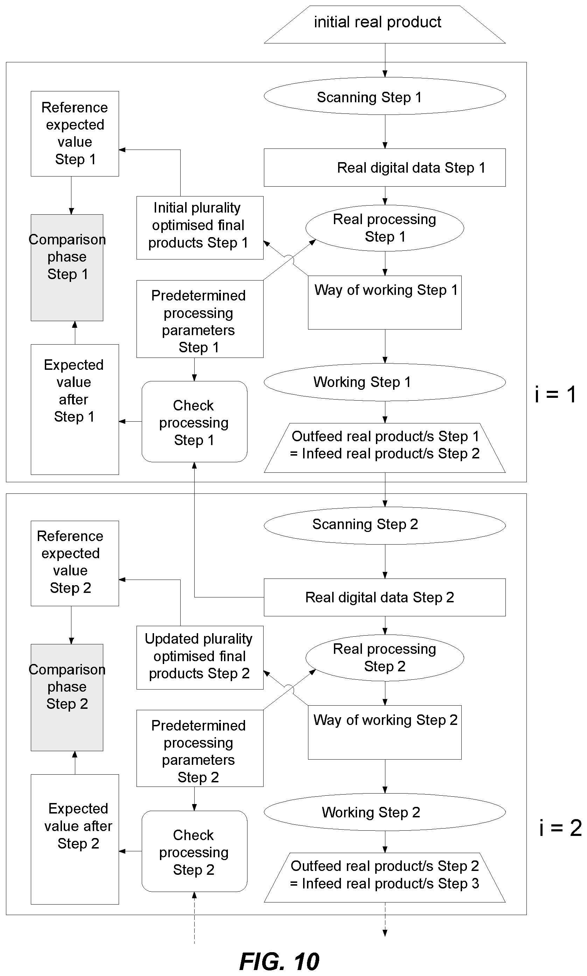

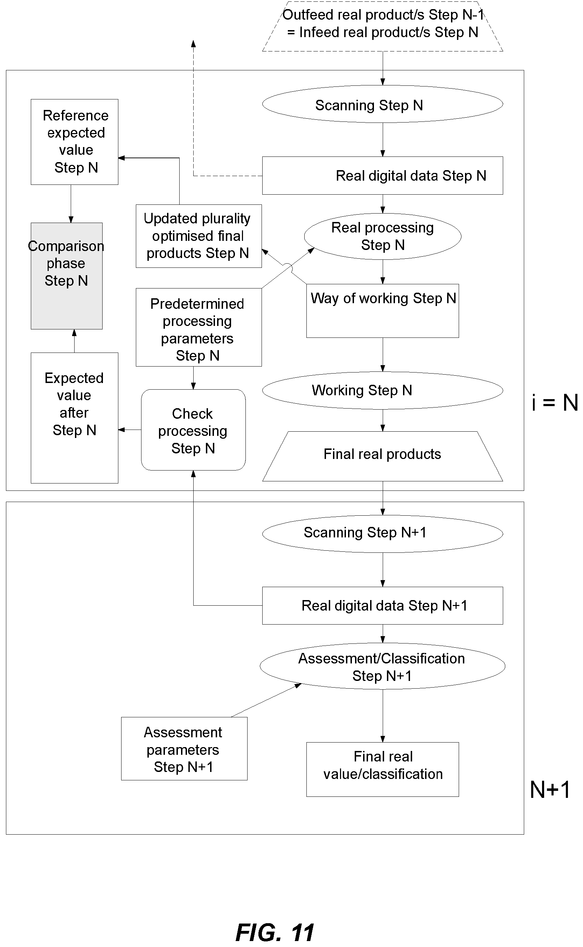

Whilst in the embodiments just described the same predetermined optimisation parameters are always used (that is to say, those used for the initial optimisation of the working process) as reference optimisation parameters, in other embodiments, to which Figures 9 to 11 refer, in contrast during the reference processing phase the reference optimisation parameters used are the nth optimisation parameters, that is to say, optimisation parameters of the nth step itself (advantageously parameters which correspond to the predetermined processing parameters used in the real processing phase of the nth step of the working process). In this case too, the real digital data generated in the scanning phase of the nth step are then used for all of the real products at infeed to the nth step which derive from the initial real product, and an optimisation is carried out of the (N-(n-1)) steps of the working process still to be carried out starting from and including the nth step, thereby determining an updated nth plurality of virtual optimised final products to be obtained from all of the one or more real products at infeed to the nth step which derive from the initial real product, and determining the expected value for that updated nth plurality of virtual optimised final products. Finally, the reference expected value used is the expected value determined in this way for the updated nth plurality of virtual optimised final products.

In some preferred embodiments, as already indicated, during the check processing phase, to determine the updated nth plurality of virtual optimised final products, an assessment algorithm is used which is constituted of the optimisation algorithm used for execution of the optimisation phase for the entire working process for the real product in the initial step of the working process, or of a part of the optimisation algorithm.

In some embodiments, after the comparison phase, the sequence of phases for monitoring the nth step of the working process also comprises an analysis phase during which the result of the comparison phase is examined, in particular the sign (plus or minus) and the absolute value of the change in the expected value determined in the comparison phase. In some cases, when the change in the expected value, determined in the comparison phase for all of the real products at infeed which derive from a single initial real product, has the minus sign and, as an absolute value, is greater than a preset threshold, it is determined that for the initial real product in question, the working process presented an operating problem at the nth step.

In other cases, in contrast, the results of the comparison phase relative to a single initial real product are not considered, but, as a whole, those relative to a plurality of separate initial real products, after the monitoring method has been carried out for all of that plurality of separate initial real products which one after another undergo the working process. In these cases, advantageously, the sequence of phases for monitoring the nth step of the working process also comprises a saving phase, during which the result of the comparison phase for each initial real product is saved in an electronic memory. The monitoring method also comprises an analysis phase during which the saved results of the various comparison phases are analysed as a whole to identify any operating problems at the nth step of the working process. Advantageously, during the analysis phase, the saved results of the comparison phases are statistically analysed to identify whether or not, according to statistical assessment criteria, the nth step of the working process operates as expected.

In some embodiments, the analysis phase also comprises a problem identification phase which is carried out when there was an operating problem at the nth step of the working process. During the problem identification phase one or more known causes amongst a plurality of saved known causes are identified as causes of the problem.

By way of example, in some embodiments the problem identification phase is carried out using an identification algorithm which correlates each of a plurality of known problems with one or more causes included amongst the plurality of saved known causes. Depending on the steps of the working process, the known causes may comprise: measurement/detection errors by the devices used in the scanning phases; setting errors for some working parameters; centring/alignment/guide device calibration error; cutting device calibration error; setting errors for the nth optimisation parameters; etc.

The identification algorithm can be configured in many different ways, depending on requirements. In some cases, it may be based on simple correlations expected a priori, such as, for example:
- if the problem encountered is that the boards come out of a drying phase too curved, it means that the drying process is carried out with incorrect parameters (for example, the temperature is too high);
- if the problem encountered is that the cants which are obtained by cutting the logs are too bevelled on one side, it means that the log centring system is not calibrated correctly.

In other cases, in contrast, the problem identification phase is carried out using an artificial intelligence algorithm trained to receive, as input data, information about the problem detected in the execution of the nth step of the working process and to supply, as output data, the one or more known causes which are part of the plurality of saved known causes. An artificial intelligence algorithm of this type can be trained by supplying the algorithm itself with training data in which a variety of problems detected in the execution of a specific step of the working process (input data) are correlated with specific known causes effectively encountered in the working process (output data).

In other embodiments, in contrast, it is possible that the analysis phase does not explicitly determine the presence of the operating problem. In fact, in some embodiments, the saved results of the comparison phases (that is to say, the changes in the expected value encountered with each execution) are used to quantify how much the nth step of the working process causes a reduction in the expected value for the final real products to be obtained. Advantageously the reduction in value is quantified as a percentage and using statistical analysis. In these embodiments, the problem identification phase may be carried out using an artificial intelligence algorithm trained to receive, as input data, the reduction in expected value quantified for the nth step, and to supply, as output data, said one or more know causes amongst a plurality of saved known causes. An artificial intelligence algorithm of this type can be trained by supplying the algorithm itself with training data in which various value reduction values detected in the execution of a specific step of the working process (input data) are correlated with specific known causes effectively encountered in the working process (output data).

Alternatively to the use of an artificial intelligence algorithm, at least in some cases it is possible to use an identification algorithm which correlates various ranges of change in the expected value determined in the analysis phase with one or more causes included amongst the plurality of saved known causes.

For example, the Applicant was able to ascertain that, when there is a big reduction in the value in the step of the working process in which a log is cut to obtain a cant, the problem is almost always linked to operation of the log centring system.

Advantageously, in order to be able to be used in combination with a working process in which separate initial real products are worked one after another, the monitoring method also comprises a tracking phase and an associating phase.

During the tracking phase the monitoring method, using digital data supplied by suitable apparatuses associated with the production process (usually already provided in common working plants), monitors which real product being worked undergoes each phase of each step of the working process. The apparatuses which supply the digital data for the tracking phase may be of any type commonly used for tracking products in working plants; by way of example, they may be apparatuses which simply follow the individual products along the path or apparatuses capable of recognising the individual products, either thanks to identifying elements associated with them or by means of direct analysis of the products when the latter have distinctive characteristics (also known as fingerprints in the woodworking sector).

During the associating phase, each real product being worked (in each step of the working process) is associated with information about the initial real product from which it derives, the optimisation phase carried out for that initial real product and the reference optimisation parameters, and/or other aspects necessary for correct execution of the other phases of the monitoring method. In order to facilitate understanding of the text of the description and of the claims, the following key of main terms used is provided:
- optimisation algorithm: algorithm used for execution of the optimisation phase for the entire working process for the real product in the initial step of the working process;
- assessment algorithm: algorithm used during the check processing phase of the monitoring method;
- real digital data: data generated during the scanning phase for the real product at infeed to each step of the working process;
- analysis phase: phase of the monitoring method during which the results of the comparison phase are analysed;
- associating phase: phase of the monitoring method during which each real product being worked is associated with information about the initial real product from which it derives, the optimisation phase carried out for that initial real product and the reference optimisation parameters;
- comparison phase: phase of the monitoring method in which the nth expected value calculated in the check processing phase is compared with the reference expected value;
- check processing phase: phase of the monitoring method during which, after an nth step, the updated nth plurality of virtual optimised final products to be obtained is determined and its respective nth expected value is determined;
- reference processing phase: phase of monitoring method with which the reference expected value is determined;
- real processing phase: phase of each step of the working process, during which the way of working the real product at infeed is determined;
- working phase: phase of each step of the working process, during which the working operation is carried out on the real product at infeed;
- saving phase: phase of the monitoring method during which the result of the comparison phase is saved in an electronic memory;
- optimisation phase: phase of the working process with which the initial plurality of virtual optimised final products is defined to be obtained from the initial real product at the end of the N steps;
- receiving phase: phase of the monitoring method for receiving the real digital data generated in the scanning phase of the (n+1)th step;
- scanning phase: phase of each step of the working process during which the real product at infeed is scanned and the real digital data are thereby generated;
- tracking phase: phase of the monitoring method, during which there is monitoring of which real product being worked undergoes each phase of each step of the working process;
- way of working: set of rules/criteria used in the working phase, determined in the real processing phase;
- updated nth plurality of virtual optimised final products: set of all of the virtual products which should be obtained from all of the real products at outfeed from the nth step, which derive from a same initial real product, determined during the processing and check phase of the monitoring method;
- nth optimisation parameters: parameters used in some embodiments of the reference processing phase of the monitoring method;
- predetermined processing parameters: parameters used for execution of the real processing phase of each step of the working process to determine the way of working;
- reference optimisation parameters: parameters used for execution of the check processing phase of the monitoring method;
- final step: last step of the working process in which a working operation is carried out;
- initial step (step 1): first step of the working process in which a working operation is carried out;
- initial plurality of virtual optimised final products: set of all of the virtual products which should be obtained from the initial real product, determined before execution of the first step of the working process;
- final real products: set of all of the real products obtained at the end of the working process starting from a same initial real product;
- real products at infeed: set of all of the real products obtained starting from a same initial real product, which enter a step of the working process;
- real products at outfeed: set of all of the real products obtained starting from a same initial real product, which exit a step of the working process;
- initial real product: real product on which the working process is implemented;
- sequence of phases: set of phases of the monitoring method repeated regarding each step of the working process for which the method is implemented;
- reference expected value: virtual economic value/classification determined for a plurality of virtual optimised final products which, at a predetermined point of the working process, is assessed as possible to be obtained from the initial real product at the end of the working process, and which is used as a reference for the comparison phase;
- nth expected value: virtual economic value/classification determined for a plurality of virtual optimised final products which, at the end of the nth step of the working process, is assessed as possible to be obtained from the initial real product at the end of the working process, and which is compared with the reference expected value in the comparison phase;
- change in the expected value: a measurement of how the expected value changed between the moment of the working process when the reference expected value was assessed and the moment of the working process when the nth expected value is assessed.

*

This invention brings important advantages.

In fact, thanks to this invention a monitoring method was defined which allows an understanding of whether or not a predetermined step of a working process causes a loss in the value obtainable from the products being worked, compared with what was expected in the reference assessment.

Furthermore, by implementing the method regarding each step of the production process, it is possible to understand what impact each step has relative to an overall loss in value, allowing priority to be given to intervention on those steps of the process for which the most significant losses in value occur.

Finally, it should be noticed that this invention is relatively easy to produce and that even the cost linked to implementing the invention is not very high; in fact, it can easily be implemented with data already available in the context of the normal production process, using algorithms which are largely substantially identical to those used in the production process.

The invention described above may be modified and adapted in several ways without thereby departing from the scope of the inventive concept.

All details may be substituted with other technically equivalent elements and the materials used, as well as the shapes and dimensions of the various components, may vary according to requirements.

## Claims

1. A computer-implemented monitoring method, for monitoring a working process wherein:
i) an initial real product is divided into a plurality of final real products;
ii) the working process comprises a number N of steps carried out one after another, where N ≥ 2;
iii) in each step of the working process one or more real products at infeed, are worked to obtain one or more real products at outfeed;
iv) the working process comprises an initial step, in which the real product at infeed is the initial real product, and a final step, in which each real product at outfeed constitutes one final real product of said plurality of final real products; and
v) for each step before the final step, each real product at outfeed was obtained from the initial real product during execution of the working process and constitutes a real product at infeed to an immediately subsequent step in the working process;
the monitoring method being **characterised in that** it comprises after execution of an nth step of the working process, where 1 ≤ n < N, a check processing phase during which an nth expected value is determined which is obtainable by carrying out the (N-n) steps of the working process to be carried out starting from the (n+1)th step on all of the real products at outfeed from the nth step, and a comparison phase in which the nth expected value calculated in the check processing phase is compared with a reference expected value which represents a value which was expected to be obtained as a whole from all of the one or more real products at infeed to a kth step of the working process, where 0 < k ≤ n, by carrying out all of the (N-(k-1)) steps of the working process which were still to be carried out.

2. The monitoring method according to claim 1, wherein in the working process in addition:
vi) each step of the working process comprises, in order:
- a scanning phase, during which the real product at infeed is scanned with one or more electronic scanning devices which generate real digital data relative to the real product at infeed;
- a real processing phase, during which an electronic processing device determines a way of working the real product at infeed, using the real digital data relative to the real product at infeed and predetermined processing parameters; and
- a working phase during which a working apparatus carries out a working operation on the real product at infeed in accordance with the way of working determined in the real processing phase, in order to obtain the one or more real products at outfeed;
vii) in the initial step, the real processing phase is part of an optimisation phase for the entire working process for the initial real product, with which an initial plurality of virtual optimised final products is defined, to be obtained from the initial real product at the end of the N subsequent steps, the optimisation phase being carried out based on the real digital data generated for the initial real product and based on predetermined optimisation parameters;
and wherein the monitoring method comprises, after execution of the nth step of the working process, a sequence of phases for monitoring the nth step of the working process which comprises:
a) a receiving phase during which the real digital data generated in the scanning phase of the (n+1)th step are received, relative to all of the one or more real products at outfeed from the nth step which derive from the initial real product;
b) the check processing phase, during which, using reference optimisation parameters and said real digital data received in the receiving phase:
- an optimisation is carried out of the (N-n) steps of the working process to be carried out starting from the (n+1)th step;
- in this way an updated nth plurality of virtual optimised final products is determined to be obtained from all of the one or more real products at outfeed from the nth step which derive from the initial real product; and
- the nth expected value is determined for that updated nth plurality of virtual optimised final products to be obtained; and
c) the comparison phase.

3. The monitoring method according to claim 2, also comprising a reference processing phase during which, using said reference optimisation parameters and real digital data generated in the scanning phase of a kth step for all of the real products at infeed to the kth step which derive from the initial real product, where 0 < k ≤ n:
- an optimisation is carried out of the (N-(k-1)) steps of the working process to be carried out starting from the kth step;
- in this way an updated kth plurality of virtual optimised final products is determined to be obtained from all of the one or more real products at infeed to the kth step which derive from the initial real product;
- an expected value is determined for that updated kth plurality of virtual optimised final products; and
- the reference expected value used is the expected value determined for the updated kth plurality of virtual optimised final products.

4. The monitoring method according to claim 3, wherein:
- the reference processing phase is carried out using said predetermined optimisation parameters as reference optimisation parameters and the real digital data generated in the scanning phase of the initial step and comprises the optimisation phase for the entire working process for the initial real product;
- during the reference processing phase, the expected value is determined for the initial plurality of virtual optimised final products;
- the reference expected value used is the expected value determined for the initial plurality of virtual optimised final products.

5. The monitoring method according to claim 3, wherein:
- the reference processing phase is carried out using said predetermined optimisation parameters as reference optimisation parameters, and the real digital data generated in the scanning phase of the nth step for all of the real products at infeed to the nth step which derive from the initial real product;
- during the reference processing phase an optimisation is carried out of the (N-(n-1)) steps of the working process to be carried out starting from the nth step;
- in that way an updated nth plurality of virtual optimised final products is determined to be obtained from all of the one or more real products at infeed to the nth step which derive from the initial real product;
- an nth expected value is determined for that updated nth plurality of virtual optimised final products; and
- the reference expected value used is the expected value determined for the updated nth plurality of virtual optimised final products.

6. The monitoring method according to claim 2, also comprising a reference processing phase during which, using nth optimisation parameters as reference optimisation parameters and real digital data generated in the scanning phase of the nth step for all of the real products at infeed to the nth step which derive from the initial real product:
- an optimisation is carried out of the (N-(n-1)) steps of the working process to be carried out starting from the nth step;
- in that way an updated nth plurality of virtual optimised final products is determined to be obtained from all of the one or more real products at infeed to the nth step which derive from the initial real product;
- an expected value is determined for that updated nth plurality of virtual optimised final products; and
- the reference expected value used is the expected value determined for the updated nth plurality of virtual optimised final products.

7. The monitoring method according to any one of claims 2 to 6, wherein said sequence of phases for monitoring the nth step of the working process is carried out after each step of the working process.

8. The monitoring method according to any one of claims 2 to 7, wherein during the check processing phase, to determine the updated nth plurality of virtual optimised final products, an assessment algorithm is used which is constituted of an optimisation algorithm used for execution of the optimisation phase for the entire working process for the real product in the initial step of the working process, or of a part of the optimisation algorithm.

9. The monitoring method according to any one of claims 1 to 8, wherein during the comparison phase a change in the expected value between the reference expected value and the nth expected value is quantified.

10. The monitoring method according to claim 9 when it depends on claim 2, wherein the sequence of phases for monitoring the nth step of the working process also comprises:
d) an analysis phase during which, when the change in the expected value has a minus sign and as an absolute value is greater than a preset threshold, it is determined that for the initial real product the working process presented an operating problem at the nth step.

11. The monitoring method according to claim 9 when it depends on claim 2, wherein the monitoring method is carried out for a plurality of initial real products which one after another undergo the working process, and the sequence of phases for monitoring the nth step of the working process also comprises:
e) a saving phase during which the result of the comparison phase for each initial real product is saved in an electronic memory;
and wherein the monitoring method also comprises an analysis phase during which the saved results of the comparison phases are analysed to identify operating problems at the nth step of the working process.

12. The monitoring method according to claim 11, wherein during the analysis phase the saved results of the comparison phases are statistically analysed.

13. The monitoring method according to claim 11 or 12, wherein the analysis phase, when it identifies an operating problem at the nth step of the working process, comprises a problem identification phase during which one or more known causes amongst a plurality of saved known causes are identified as causes of the problem.

14. The monitoring method according to claim 13, wherein the problem identification phase is carried out using an identification algorithm which correlates each of a plurality of known problems with one or more of said plurality of saved known causes.

15. The monitoring method according to claim 13, wherein the problem identification phase is carried out using an artificial intelligence algorithm trained to receive, as input data, information about a problem detected in the execution of the nth step of the working process and to supply, as output data, said one or more known causes amongst a plurality of saved known causes.

16. The monitoring method according to claim 13, wherein, during the analysis phase, the saved results of the comparison phases are used to quantify how much the nth step of the working process causes a reduction in the expected value for the final real products to be obtained and wherein the problem identification phase is carried out using an artificial intelligence algorithm trained to receive, as input data, the reduction in the expected value quantified for the nth step, and to supply, as output data, said one or more known causes amongst a plurality of saved known causes.

17. The monitoring method according to any one of claims 1 to 16, also comprising a tracking phase, during which there is monitoring of which real product being worked undergoes each phase of each step of the working process.

18. The monitoring method according to claim 17 when it depends on claim 2, also comprising an associating phase, during which each real product being worked is associated with information about the initial real product from which it derives, the optimisation phase carried out for that initial real product and the reference optimisation parameters.

19. A computer program comprising instructions which, when the program is run in a computer, make the computer carry out the phases of the method according to any one of claims 1 to 18.

20. A data processing device comprising means configured to implement the phases of the method according to any one of claims 1 to 18.
